# EUROPÄISCHE PATENTSCHRIFT

(11) **EP 3 086 003 B1**
(45) Veröffentlichungstag und Bekanntmachung des Hinweises auf die Patenterteilung: **06.11.2024**
(21) Anmeldenummer: 16000587.2
(22) Anmeldetag: 11.03.2016
(51) Int. Cl.: F16J 15/06, F16J 15/10

(54) **DICHTUNG IM KRAFTNEBENSCHLUSS ALS CLIPS-SET**
SEAL IN A SHUNT AS CLIPS SET
JOINT EXPOSÉ AUX FORCES EN TANT QU'ENSEMBLE DE CLIPS

(30) Priorität: 23.04.2015 DE 202015002966 U
(43) Veröffentlichungstag der Anmeldung: 26.10.2016
(73) Patentinhaber: Klinger GmbH, 65510 Idstein (DE)
(72) Erfinder: Steffens, Robert, 55124 Mainz (DE); Royer, Franck, 57905 Sarreinsming (FR)
(74) Vertreter: Henseler, Daniela

(56) Entgegenhaltungen:
- EP-A1- 1 293 709
- DE-A1- 102013 003 401
- DE-U1- 20 106 824
- GB-A- 2 455 320

## Beschreibung

Die Erfindung betrifft eine Dichtung für einen Kraftnebenschluss mit zwei oder mehreren Ringen als zusammensteckbare Bauteile.

Dichtungen im Kraftnebenschluss kommen überall dort zum Einsatz, wo sehr große Schrauben-, Rohrleitungs- und Verbindungskräfte wirken sowie niedrige bis hohe Prozessdrücke mit geeigneten Werkstoffen beherrscht werden müssen. Hierbei werden diese Kräfte in der Regel von dem statisch wirkenden und druckstabilen Anteil dieser Dichtung aufgenommen. Der Einsatz bei kritischen niedrigen sowie hohen Temperaturen richtet sich immer nach der Verfügbarkeit des weichen und anpassungsfähigen Anteils einer solchen Dichtung.

Am Markt verfügbare Dichtungen im Kraftnebenschluss weisen bezüglich ihres drucktragenden Anteils im Übergang zu dem kombinierten Dichtwerkstoff immer ein Prinzip der Dichtungsführung (z.B. Nut und Feder, etc.) auf.

Aus DE 10 2013 003 401 A1 ist eine Kraftnebenschlussdichtung bekannt, bei der Fügelinien zwischen einem Stützring und einem Dichtungsring vorgesehen sind.

Aus EP 1 293 709 A1 ist eine Weichstoffdichtung, gemäß der Präambel von Anspruch 1, mit einem innenliegenden Dichtungskörper und einem außenliegenden Dichtungskörper bekannt, wobei diese mittels einem leichten Presssitz ineinander fügbar sind. Ähnliche Dichtringe sind auch aus DE 201 06 824 U1 und GB 2 455 320 A bekannt.

Aufgabe der Erfindung ist es, eine verbesserte Dichtung für den Kraftnebenschluss zu schaffen. Diese Aufgabe wird gelöst durch eine Dichtung für einen Kraftnebenschluss mit zwei oder mehreren Ringen als zusammensteckbare Bauteile, die rechtwinklige, durch das Stanzen ausgebildete, Bauteilgrenzen zueinender aufweisen, wobei die Dichtung von dem Außendurchmesser des kleineren Bauteils zu dem Innendurchmesser des nächst größeren Bauteils einen Press- / Schiebesitz (A, B - 6, 7) ausbildet und somit ein Zusammenfügen via clipsen ermöglicht und der Press-/Schiebesitz (A, B - 6, 7) vertikal im rechten Winkel zur eigentlichen Bauteilebene ausgeführt ist.

Die Neuheit dieser Erfindung verzichtet komplett auf eine solche zusätzliche Bearbeitung. Dies ermöglicht die kostengünstige Variante des Stanzens aus vertikaler Bearbeitungsebene zu horizontal angeordnetem Ausgangsmaterial (in der Regel Plattenware aus unterschiedlichsten Werkstoffen (z.B. Metalle, Kunststoffe, Faserverbundstoffe, etc.)). Hierdurch wird der kostenintensive Anteil der Schaffung von passgenauen und komplizierten Bauteilebenen komplett aufgehoben und entfällt somit. Es verbleiben rechtwinklige, durch das Stanzen ausgebildete, Bauteilgrenzen zueinander.

Die Anzahl der Halbzeuge von diesen Dichtungen im Kraftnebenschluss kann beliebig groß oder klein gewählt werden und richtet sich im Wesentlichen nach dem Ideal aus technischem Anspruch kombiniert mit wirtschaftlicher Attraktivität. So kann es z.B. Dichtungen bestehend aus 2 Bauteilen (z.B. Ringe, etc.) oder mehr (z.B. 3 Ringe, etc.) geben.

Die genaue Montage erfolgt am Einbauort der Dichtung im Kraftnebenschluss selbst.

Hierzu wird ein vorher bereitgestelltes Set einer solchen neuen Dichtung im Kraftnebenschluss einfach zusammengeclipst.

Hierbei besitzen die jeweils zu kombinierenden Bauteilebenen entsprechende Toleranzen in ihrer Bauteilgrenze, so dass bei der späteren Kombination ein zwangsgeführter und passgenauer Press-/Schiebesitz entsteht.

Bei dieser Neuheit der Erfindung können beliebige Werkstoffe (z.B. Metalle und deren Legierungen, Kunststoffe, Faserverbundwerkstoffe, etc.) und/oder deren Kombinationen zum Einsatz kommen. Dies kann auf Basis einer technischen Notwendigkeit und/oder aus wirtschaftlichen Gesichtspunkten begründet sein.

Der Realisierung von für den Einsatz notwendigen Geometrien sind keinerlei Grenzen gesetzt. Egal ob dies einfache radiale Konstruktionen (z.B. Ringe, etc.) oder komplexe Systeme (z.B. Polygone, etc.) sind. Ebenso können die Halbzeuge je nach Größe der Dichtung aus Segmenten zusammengesetzt werden. Wichtig ist hier nur, dass das Halbzeug mit der ausschließlich dichtenden Funktion nach Montage eine komplett geschlossene Struktur aufweist und keinerlei Fügungslinien - wie sie bei Segmenten und deren Kombination zwangsweise vorhanden sind - aufweist.

Zusammenfassend ist festzuhalten, dass besondere Merkmale der Erfindung sind:
- eine einfache Fertigung der Halbzeuge,
- eine beliebige Anzahl der Halbzeuge,
- eine passgenaue Montage der Halbzeuge zu einer Dichtung im Kraftnebenschluss am Ort des Einbaus,
- eine beliebige Werkstoffkombination von Halbzeugen,
- eine Realisierung beliebiger Geometrien und Abmessungen.

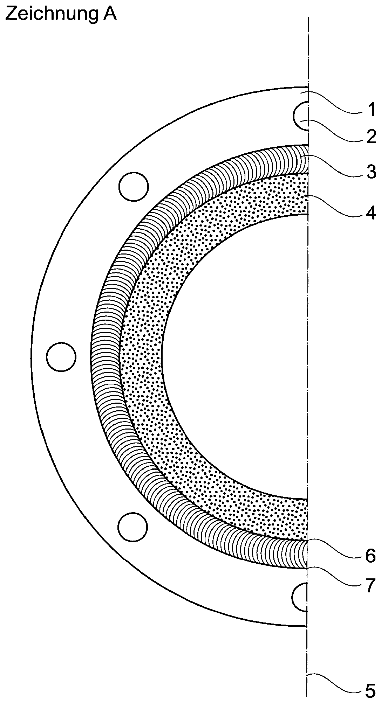

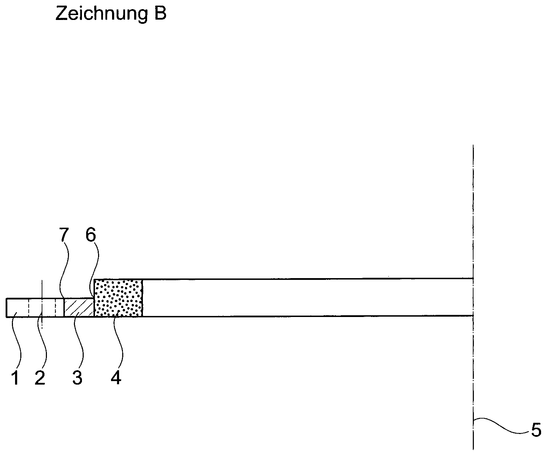

Die Zeichnung A zeigt eine Dichtung im Kraftnebenschluss als Clips-Set in beispielhafter, 3-teiliger und radialer Darstellung in Draufsicht.

Die Zeichnung B zeigt eine Dichtung im Kraftnebenschluss als Clips-Set in beispielhafter 3-teiliger und radialer Darstellung in Seitenansicht.

### Bezugszeichenliste

- 1: Außenring
- 2: Bohrloch eines Flanschbohrbildes
- 3: Mittenring
- 4: Innenring
- 5: Konstruktionslinie als mittige Teilung
- 6: Press-/Schiebesitz zwischen Außendurchmesser des Innenringes zu Innendurchmesser des Mittenringes
- 7: Press-/Schiebesitz zwischen Außendurchmesser des Mittenringes zu Innendurchmesser des Außenringes

## Patentansprüche

1. Dichtung für einen Kraftnebenschluss mit zwei oder mehreren Ringen (1, 3, 4) als zusammensteckbare Bauteile, die rechtwinklige, durch das Stanzen ausgebildete, Bauteilgrenzen zueinander aufweisen, wobei die Dichtung von dem Außendurchmesser des kleineren Bauteils zu dem Innendurchmesser des nächsten größeren Bauteils einen Press-/Schiebesitz ausbildet, **dadurch gekennzeichnet dass** ein Zusammenfügen via clipsen erfolgt und diese kraftschlüssige Verbindung als Press-/Schiebesitz vertikal im rechten Winkel zur eigentlichen Bauteilebene ausgeführt ist, und die Toleranzen zur Ausbildung des Press-/Schiebesitzes für das Clips-Set so wählbar sind, dass ein manuelles Einschieben der Bauteile zu einer kompletten Einheit möglich ist, und zwar unter Abstimmung der jeweiligen Werkstoffeigenschaften der Bauteile zueinander.

2. Dichtung nach Anspruch 1, **dadurch gekennzeichnet, dass** die Bauteile in beliebigen Geometrien und Größen mit oder ohne Bohrbilder darstellbar sind.

3. Dichtung nach Anspruch 1 oder 2, **dadurch gekennzeichnet, dass** die Bauteile aufeinander abstimmbare Werkstoffdicken im Bereich von 1 bis 15 mm besitzen.

4. Dichtung nach einem der Ansprüche 1 bis 3, **dadurch gekennzeichnet, dass** die Bauteile homogene oder heterogene Werkstoffdicken zueinander besitzen.

5. Dichtung nach einem der Ansprüche 1 bis 4, **dadurch gekennzeichnet, dass** die Bauteile aus Metall und ihren Legierungen, Kunststoffen, Faserverbundstoffen herstellbar sind.

## Claims

1. Gasket for a compression stop having two or more rings (1, 3, 4) as components which can be assembled and which have component boundaries at right angles to one another formed by punching, the gasket defining a press/shift setting from the outside diameter of the smaller component to the inside diameter of the next larger component, **characterized in that** the components are joined together via clipping and this coupling is designed as a press/shift setting vertically executed at right angles to the actual component plane, and the tolerances for forming the press/shift setting for the clip set can be selected in such a way that the components can be inserted manually to shape a unit assembly, with the respective material properties of the components being adjusted to one another.

2. Gasket according to claim 1, **characterized in that** the components can be made in any geometries and sizes with or without drilling patterns.

3. Gasket according to claim 1 or 2, **characterized in that** the components have material thicknesses in the range from 1 to 15 mm that can be coordinated to one another.

4. Gasket according to one of claims 1 to 3, **characterized in that** the components have homogeneous or heterogeneous material thicknesses relative to one another.

5. Gasket according to one of claims 1 to 4, **characterized in that** the components can be made from metal and its alloys, plastics, fibre composites.

## Revendications

1. Joint d'étanchéité pour une partie peu exposée aux forces avec deux bagues (1, 3, 4) ou plus comme composants emboîtables, qui présentent des limites de composant à angle droit, réalisées par l'estampage, les unes par rapport aux autres, dans lequel le joint d'étanchéité réalise à partir du diamètre extérieur du composant plus petit vers le diamètre intérieur du composant plus grand suivant un ajustement serré/appuyé, **caractérisé en ce qu'**un assemblage s'effectue par le biais de clips et cette liaison à force en tant qu'ajustement serré/appuyé est conçue verticalement à angle droit par rapport au plan de composant proprement dit, et les tolérances pour la réalisation de l'ajustement serré/appuyé pour l'ensemble de clips peuvent être choisies de telle sorte qu'une introduction manuelle des composants en une unité complète est possible, et ce avec adaptation des propriétés de matériau respectives des composants les uns par rapport aux autres.

2. Joint d'étanchéité selon la revendication 1, **caractérisé en ce que** les composants peuvent être représentés dans des géométries et grandeurs quelconques avec ou sans schémas de perçage.

3. Joint d'étanchéité selon la revendication 1 ou 2, **caractérisé en ce que** les composants possèdent des épaisseurs de matériau pouvant être adaptées les unes aux autres dans la plage de 1 à 15 mm.

4. Joint d'étanchéité selon l'une quelconque des revendications 1 à 3, **caractérisé en ce que** les composants possèdent des épaisseurs de matériau homogènes ou hétérogènes les unes par rapport aux autres.

5. Joint d'étanchéité selon l'une quelconque des revendications 1 à 4, **caractérisé en ce que** les composants peuvent être fabriqués à partir de métal et leurs alliages, matières plastiques, matières composites renforcées par des fibres.
